# EUROPEAN PATENT APPLICATION

(11) **EP 4 769 581 A1**
(43) Date of publication of application: **01.07.2026**
(21) Application number: 25797843.7
(22) Date of filing: 04.02.2025
(51) Int. Cl.: H01M 4/66, H01M 4/13, H01M 10/0562, H01M 10/0585, H01M 4/139, H01M 4/62, H01M 4/38, H01M 4/40, H01M 4/02

(54) **ANODE, MANUFACTURING METHOD THEREFOR, AND ALL-SOLID-STATE BATTERY INCLUDING SAME**

(30) Priority: 02.05.2024 KR 20240058784; 05.08.2024 KR 20240104078
(71) Applicant: LG Energy Solution, Ltd., Seoul 07335 (KR)
(72) Inventor: CHOI, Ran, Daejeon 34122 (KR); JUNG, Yun-Chae, Seongnam-si, Gyeonggi-do 13509 (KR); SONG, Min Sang, Daejeon 34122 (KR); YOM, Jeeho, Daejeon 34122 (KR); YU, Ji Sang, Seongnam-si, Gyeonggi-do 13509 (KR); HAN, Dakyung, Daejeon 34122 (KR); HWANG, Sunwoo, Daejeon 34122 (KR); HWANG, Chihyun, Seongnam-si, Gyeonggi-do 13509 (KR); JEON, Sang-Jin, Seongnam-si, Gyeonggi-do 13509 (KR)
(74) Representative: Goddar, Heinz J.
(86) International application number: PCT/KR2025/001635
(87) International publication number: WO 2025/230097

(57) **Abstract**

The present invention relates to an anode, a manufacturing method therefor, and an all-solid-state battery comprising same, the anode comprising an anode current collector and an anodeless coating layer, wherein the anodeless coating layer includes a composite of a carbon-based material and a metal-halogen compound. According to the present invention, an anode, a manufactur- ing method therefor, and an all-solid-state battery comprising same may be provided, wherein the anode has improved distribution uniformity between elements in an anodeless coating layer, thus solving the problem of agglomeration, and has improved lithium-ion conduction characteristics.

## Description

### Technical Field

This application claims the benefit of priority on the basis of Korean Patent Application No. 2024-0058784, filed on May 02, 2024 and Korean Patent Application No. 2024-0104078, filed on August 05, 2024, and the entire contents disclosed in the Korean Patent Application are incorporated herein as a part of the specification.

The present disclosure relates to a negative electrode, a method for manufacturing the same and an all-solid-state battery including the same.

### Background Art

Recently, all-solid-state batteries with high energy density and stability have been proposed due to industrial demands, and efforts are being made to further improve the characteristics. For example, a method of using lithium as a negative electrode active material is being studied to increase the energy density of an all-solid-state battery.

As a method of using lithium as a negative electrode active material, a method of using lithium or a lithium alloy as a negative electrode active material layer during a battery manufacturing process, or a method of forming a lithium layer during a charging process without forming a separate negative electrode active material layer on a negative electrode current collector during a battery manufacturing process has been proposed.

However, if lithium is used as a negative electrode active material, lithium (metallic lithium) is precipitated on the negative electrode side during charging, and as the charge and discharge process is repeated, lithium dendrites grow through the gaps in a solid electrolyte layer, which cause a battery short circuit or reduce capacity, resulting in a defect.

Therefore, in order to commercialize a method of using lithium as a negative electrode active material, improvement of the defect is required.

### Disclosure of Invention

### Technical Goals

The present disclosure is intended to solve the defect and to provide a negative electrode having improved uniformity of distribution between elements in an anode-free coating layer, thereby eliminating the aggregation problem and enhancing lithium ion conductivity, a method for manufacturing the same, and an all-solid-state battery including the same.

### Technical solutions

An aspect of the present disclosure relates to a negative electrode including a negative electrode current collector and an anode-free coating layer. The anode-free coating layer includes a composite of a carbon-based material and a metal halide compound.

In an embodiment, the metal halide compound may be represented by Formula 1 below.

[Formula 1] MXₙ

In Formula 1, M is one metal selected from Mg, Ag, Zn, Al, Sn, Ge, Cu, In, Ni, Bi, Au, Si, Pt, Pd or a combination thereof, X is a halogen element, and n is an integer of 1 or more.

In an embodiment, X may be F or Cl.

In an embodiment, the content of the metal halide compound in the anode-free coating layer may be 30 weight percentage (wt%) or less.

In an embodiment, the composite may be a composited metal halide compound on the surface of the carbon-based material.

In an embodiment, the carbon-based material may be amorphous carbon.

In an embodiment, the anode-free coating layer may include a binder in a range of 0.1 to 20 parts by weight relative to 100 parts by weight of the composite.

Another aspect of the present disclosure relates to a method for manufacturing a negative electrode including a negative electrode current collector and an anode-free coating layer. The method includes mixing a composite, a binder, and a solvent to form an anode-free coating layer slurry, and applying the anode-free coating layer slurry onto the negative electrode current collector. The composite is a composite of a carbon-based material and a metal halide compound.

In an embodiment, the composite may be prepared by a method including preparing a dispersion including the carbon-based material and a precursor of the metal halide compound, and performing ultrasonic treatment for the dispersion.

In an embodiment, the precursor of the metal halide compound may be one or more selected from the group consisting of magnesium nitrate hexahydrate, magnesium perchlorate hydrate, magnesium sulfate hydrate, magnesium phosphate hydrate, magnesium lactate hydrate, magnesium D-gluconate hydrate and ammonium fluoride.

Another aspect of the present disclosure relates to an all-solid-state battery using lithium or a lithium alloy as a negative electrode active material. The all-solid-state battery includes a positive electrode, a solid electrolyte layer, and the negative electrode.

In an embodiment, the solid electrolyte layer may include a sulfide-based solid electrolyte.

In an embodiment, the sulfide-based solid electrolyte may be one or more selected from Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-Li₃PO₄, Li₂S-SiS₂-LiₚMO_{q} (p and q are positive numbers, and M is one of P, Si, Ge, B, Al, Ga and In), Li₂S-SiS₂-P₂S₅-LiI, Li₂S-P₂S₅, Li₂S-P₂S₅-LiX (X is a halogen element), Li₂S-B₂S₃, Li₂S-P₂S₅-ZₘSₙ (m and n are positive numbers), Z is one of Ge, Zn or Ga, Lᵢ₂S-GeS₂, Li₇₋ₓPS₆₋ₓClₓ (0≤x≤2), Li₇₋ₓPS₆₋ₓBrₓ (0≤x≤2) and Li₇₋ₓPS₆₋ₓIₓ (0≤x≤2).

### Effects

According to the present disclosure, a metal formed by the decomposition of a metal halide compound of a composite may improve the dynamics by reducing nucleation overpotential during charging, and may improve the stability through nucleation and alloying processes during lithiation, and a negative electrode having the characteristics of decreasing the nucleation overpotential and the polarization of the lithium deposition process after nucleation according to cycling may be provided. Through the negative electrode, an all-solid-state battery having excellent discharge capacity according to C-rate, capacity retention, and life characteristics may be provided.

### Brief Description of Drawings

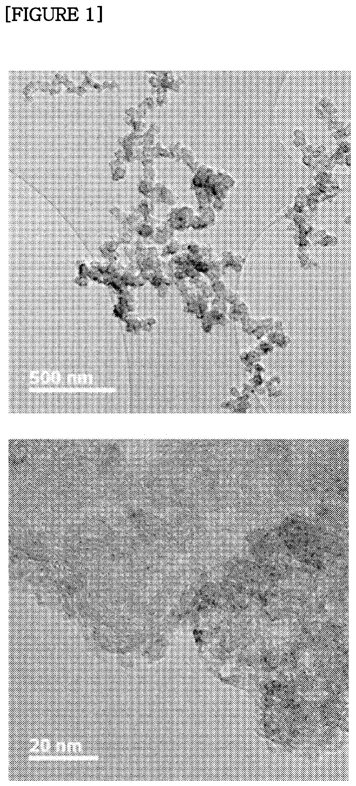

FIG. 1 shows transmission electron microscopy (TEM) images of a negative electrode manufactured in Example 2.

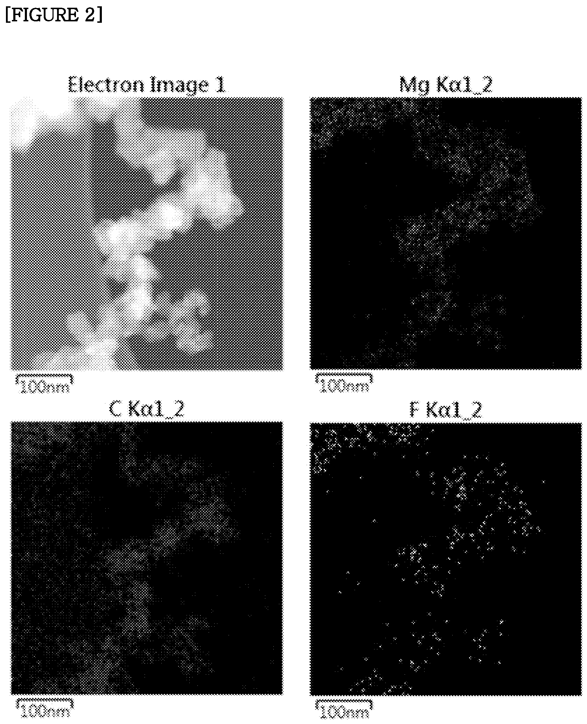

FIG. 2 shows scanning electron microscopy and energy-dispersive X-ray spectroscopy (SEM-EDS) images of a negative electrode manufactured in Example 2.
FIG. 3 shows overall voltage profiles according to the specific capacity of three-electrode batteries obtained using carbon black of Comparative Example 5 (top) and a C-MgF₂ composite of Example 2 (bottom).
FIG. 4 shows an overall voltage profile according to the cycle of three-electrode batteries using carbon black of Comparative Example 5 and a C-MgF₂ composite of Example 2.
FIG. 5 shows schematic diagrams explaining the lithiation behavior of electrodes to which a C-MgF₂ composite of Example 2 and carbon black of Comparative Example 5 are applied, respectively.
FIG. 6 shows graphs showing the voltage profiles of Example 1 (top), Example 2 (middle), and Comparative Example 5 (bottom) during capacity retention evaluation.
FIG. 7 is a graph showing the ratio of discharge capacity (vs. 0.1 C) according to C-rate by evaluating the electrochemical characteristics of the all-solid-state batteries of the Examples and Comparative Examples.

### Mode for Carrying Out the Invention

Terms or words used in this specification and claims should not be construed as limited to their common or dictionary meanings, and it should be interpreted as meaning and concept consistent with the technical idea of the present disclosure based on the principle that the inventor may appropriately define the concept of terms in order to explain his or her invention in the best way.

Therefore, it is understood that the configuration of an embodiment described in this specification is one of the most desired embodiments of the present disclosure and does not represent the entire technical idea of the present disclosure, so various equivalents and modification examples that can replace the embodiments at the time of filing the present application may exist. In this specification, singular expressions include plural expressions unless the context clearly indicates otherwise.

In this specification, if a part "includes" a certain element, it means that the part may further include other elements rather than excluding other elements, unless specifically stated to the contrary. Accordingly, for example, a composition including compound A may include compounds other than A. However, in certain embodiments, the term "including" also encompasses more limited meanings of "consisting essentially/inherently of" and "consisting of" and for example, "a composition including compound A" may also consist (essentially/inherently) of compound A.

In connection with this, as used in this specification, it should be understood that terms such as "being provided with" or "having" are intended to designate the presence of implemented features, numbers, operations, components, or combinations thereof, but not exclude in advance the possibility of the presence or addition of one or more other features, numbers, operations, components, or combinations thereof.

In this specification, if an arbitrary member is located "on" or "between" another arbitrary member(s), not only a case where such member is in contact with another member, but also a case where another member or substance exists between the two members are included.

If amounts, concentrations, or other values or parameters are given as listings of ranges, desirable ranges, desirable upper limits and desirable lower limits in this specification, it is to be understood that all ranges that may be formed from any pair of any upper range limits or desirable values and any lower range limits or desirable values, are specifically disclosed, regardless of whether the range is separately disclosed. If a range of numeric values is referred to in this specification, unless otherwise stated, for example, unless there is a limited term such as greater than and less than, the range is intended to include the endpoint values and all integers and fractions within the range. The scope of the present disclosure is not intended to be limited to the specific values referred to when defining a range.

Among the physical properties referred to in this specification, in cases where a measurement temperature affects relevant physical properties, unless otherwise specified, the physical properties are measured at room temperature. The term room temperature is a natural temperature that is not heated or reduced, and may mean, for example, any temperature in a range of about 10 degrees Celsius (°C) to 30°C, about 23°C, or about 25°C. Additionally, unless otherwise specified, the unit of the temperature in this specification is °C.

In addition, among the physical properties referred to in this specification, in cases where a measurement pressure affects relevant physical properties, unless otherwise specified, the physical properties are measured at normal pressure, that is, atmospheric pressure (about 1 atm).

A first aspect of the present disclosure relates to a negative electrode.

The present disclosure is characterized in being a negative electrode including a negative electrode current collector and an anode-free coating layer, wherein the anode-free coating layer includes a composite of a carbon-based material and a metal halide compound.

The term "anode-free coating layer" in the present specification means a coating layer formed between a negative electrode current collector and a solid electrolyte layer, or on one side of a solid electrolyte layer when a negative electrode current collector is absent, in an all-solid-state battery in which lithium is absorbed into the anode-free coating layer during charging and after the charge capacity of the anode-free coating layer is exceeded, lithium is precipitated between the negative electrode current collector and the anode-free coating layer, or when the negative electrode current collector is absent, on one surface of the anode-free coating layer opposite to the solid electrolyte layer to form a metal layer, and lithium of the anode-free coating layer and the lithium metal layer is ionized and moves toward a positive electrode during discharge, and may have a different configuration and operating mechanism from a common negative electrode active material layer. The anode-free coating layer may act as a protective layer for the lithium metal layer by covering the lithium metal layer during the charging process and may suppress the precipitation and growth of lithium dendrites, thereby suppressing short-circuiting and capacity reduction of the all-solid-state battery and improving performance or the like.

In the present specification, the term "composite" means a material formed by chemically combining two or more materials and having new properties different from each of the materials, and is a concept distinct from a mixture in which two or more materials are physically mixed at the molecular level. That is, in the present specification, the "composite of a carbon-based material and a metal halide compound" has a concept distinct from a mixture in which a carbon-based material and a metal halide compound are physically mixed, and means a material having new properties formed through the chemical reaction of the carbon-based material and the metal halide compound.

The metal halide compound may be represented by, for example, Formula 1 below.

[Formula 1] MXₙ

In Formula 1, M is any one metal selected from Mg, Ag, Zn, Al, Sn, Ge, Cu, In, Ni, Bi, Au, Si, Pt, Pd or a combination thereof, X is a halogen element, and n is an integer of 1 or more.

In the present specification, the term "halogen element" includes, but is not limited to, for example, F, Cl, Br or I. X may be, for example, F or Cl. By setting X to F or Cl, the lithium ion conductivity of the anode-free coating layer may be further improved.

The negative electrode of the present disclosure may be characterized by, for example, that the weight ratio of the metal halide compound to the composite is 35 weight percentage (wt%) or less. The negative electrode may be characterized by that, in another embodiment, the weight ratio of the metal halide compound to the composite is 30 wt% or less, 25 wt% or less, or 1 wt% or more, and 5 wt% or more, or 10 wt% or more. In this case, the weight ratio may be measured by, for example, thermogravimetric analysis (TGA), but is not limited thereto.

The negative electrode of the present disclosure may be characterized by, for example, that the content of the metal halide compound relative to the anode-free coating layer is 30 wt% or less. In another embodiment, the negative electrode may be characterized by that the content of the metal halide compound relative to the anode-free coating layer is 25 wt% or less, 20 wt% or less, or 15 wt% or less, or 10 wt% or more, 15 wt% or more, or 20 wt% or more. In this case, the content of the metal halide compound relative to the anode-free coating layer may be measured, for example, by thermogravimetric analysis (TGA).

The negative electrode of the present disclosure may be characterized by, for example, that a weight ratio of the metal halide compound relative to carbon in the anode-free coating layer is 35 wt% or less. The negative electrode may be characterized by that, in another embodiment, the weight ratio of the metal halide compound relative to carbon in the anode-free coating layer is 30 wt% or less, 25 wt% or less, 20 wt% or less, or 15 wt% or less, or 10 wt% or more, 15 wt% or more, 20 wt% or more, 25 wt% or more, or 30 wt% or more. In this case, the weight ratio of the metal halide compound relative to carbon in the anode-free coating layer may be measured by, for example, thermogravimetric analysis (TGA).

The present disclosure controls the content of the metal halide compound relative to the composite, the content of the metal halide compound relative to the anode-free coating layer, and/or the weight ratio of the metal halide compound relative to the carbon of the anode-free coating layer within the above ranges, thereby controlling the crystallinity of the composite particles, resolving the agglomeration problem of the metal halide compound included in the composite, and making the distribution of the metal halide compound more uniform, and accordingly provides an all-solid-state battery having excellent lithium ion conductivity, excellent discharge capacity characteristics according to C-rate, capacity retention, and life characteristics.

The composite may be characterized by, for example, a metal halide compound being composited on the surface of the carbon-based material. In the present specification, "a metal halide compound composited on the surface of the carbon-based material" means, for example, a structure in which the metal halide compound uniformly or non-uniformly wraps a portion or the entire of the surface of the carbon-based material. In an embodiment, the metal halide compound is uniformly or non-uniformly distributed in the form of nanodots on the surface of the carbon-based material, or in another embodiment, the metal halide compound is coated on a portion or the entire of the surface of the carbon-based material, or in another embodiment, the metal halide compound wraps the surface of the carbon-based material in the form of a mesh, or in another embodiment, the metal halide compound and the carbon-based material may have a core-shell or yolk-shell form structure, but is not limited thereto. The metal halide compound may be, for example, uniformly or non-uniformly distributed on the surface of the carbon-based material, and may be uniformly distributed from the viewpoint of providing a sufficient reaction surface area for lithium to promote an electrochemical reaction.

The carbon-based material may be characterized by, for example, amorphous carbon. The amorphous carbon may be, for example, one or more selected from the group consisting of carbon black, acetylene black, furnace black, Ketjen black, and graphene, but is not limited thereto, and any amorphous carbon that may be used in an anode-free all-solid-state battery may be used, without limitation.

The anode-free coating layer of the present disclosure may further include, for example, a binder. As the binder, for example, an aqueous binder, an organic binder, or a combination thereof may be used. The binder may be, for example, polyvinyl alcohol, n-butyl butyrate, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinyl pyrrolidone, polyurethane, polytetrafluoroethylene, polyvinylidene, fluoride, polyethylene, polypropylene, styrene-butadiene rubber, acrylate styrene-butadiene rubber, an epoxy resin, nylon, or a combination thereof. The aqueous binder may be, for example, styrene butadiene rubber, carboxymethyl cellulose, or a combination thereof. The organic binder may be, for example, polytetrafluoroethylene, polyvinylidene fluoride, or a combination thereof.

The anode-free coating layer of the present disclosure may include, for example, the binder in a range of 0.1 to 20 parts by weight relative to 100 parts by weight of the composite. In another embodiment, the anode-free coating layer of the present disclosure may include the binder in 0.5 parts by weight or more, 1 part by weight or more, 2 parts by weight or more, 3 parts by weight or more, 4 parts by weight or more, 5 parts by weight or more, or 6 parts by weight or more, or 18 parts by weight or less, 16 parts by weight or less, 14 parts by weight or less, 12 parts by weight or less, 10 parts by weight or less, or 8 parts by weight or less, relative to 100 parts by weight of the composite.

The anode-free coating layer of the present disclosure may further include, for example, a solvent. In the present specification, the meaning that the anode-free coating layer further includes a solvent may mean that a solvent is used in the process of manufacturing the anode-free coating layer, and may not mean that the anode-free coating layer finally manufactured through drying, or the like, contains a solvent. The solvent may include water, n-methyl pyrrolidone (NMP), or the like.

The anode-free coating layer of the present disclosure may further include, for example, a metal, a metalloid element, or a combination thereof, that forms an alloy or compound with lithium separately from the composite.

The metal, metalloid element, or a combination thereof, that forms an alloy or compound with lithium, and may be further include separately from the composite may be, for example, one or more selected from the group consisting of gold (Au), platinum (Pt), palladium (Pd), silicon (Si), silver (Ag), aluminum (Al), bismuth (Bi), tin (Sn) and zinc (Zn).

The particle diameter of the metal, metalloid element or combination thereof that may be further included separately from the composite and that may form an alloy or compound with lithium may be, for example, in a range of 10 to 1000 micrometers (µm). The particle diameter may mean the maximum particle diameter, the minimum particle diameter or the average particle diameter. The particle diameter of the metal, metalloid element or combination thereof that may be further included separately from the composite and that may form an alloy or compound with lithium may be, in another embodiment, 20 µm or more, 30 µm or more, 40 µm or more or 50 µm or more, or 500 µm or less, 400 µm or less, 300 µm or less, 200 µm or less or 100 µm or less.

The anode-free coating layer of the present disclosure may further include, for example, other additives. As the other additives, fillers, coating agents, dispersants, ion conductive assistants, or the like, used in common all-solid-state batteries may be used without limitation, as long as they do not impede the purpose of the present disclosure.

The thickness of the anode-free coating layer may be 50% or less, 40% or less, 30% or less, 20% or less, 10% or less, or 5% or less of the thickness of a positive electrode active material layer described later. The thickness of the anode-free coating layer may be, for example, in a range of 1 to 20 µm, 2 to 18 µm, 3 to 15 µm, or 5 to 10 µm. By controlling the thickness of the anode-free coating layer as described above, lithium dendrites formed between the anode-free coating layer and the negative electrode current collector may be controlled to prevent the anode-free coating layer from collapsing, thereby improving cycle characteristics, improving energy density, and also reducing the internal resistance of the all-solid-state battery.

The negative electrode current collector may use a known metal that may be used as a current collector of an all-solid-state battery. The negative electrode current collector may use, for example, a material that does not form an alloy or compound with lithium. As the negative electrode current collector, for example, a material selected from the group consisting of copper (Cu), nickel (Ni), aluminum (Al), vanadium (V), gold (Au), platinum (Pt), magnesium (Mg), iron (Fe), titanium (Ti), cobalt (Co), chromium (Cr), zinc (Zn), germanium (Ge), indium (In), and stainless steel may be used, but is not limited thereto. Any material used as an electrode current collector in the relevant technical field may be used as long as it does not hinder the purpose of the present disclosure. The negative electrode current collector may be composed of one of the above-described metals, or may be composed of an alloy or a coating material of two or more metals. The negative electrode current collector may be, for example, in the form of a plate, mesh, or foil, but is not limited thereto. The thickness of the negative electrode current collector may be 1 to 100 µm, but is not limited thereto.

The negative electrode of the present disclosure may further include, for example, a thin film including an element capable of forming an alloy with lithium on the negative electrode current collector. The thin film may be included between the negative electrode current collector and the anode-free coating layer. The element capable of forming an alloy with lithium may be, for example, gold, silver, zinc, tin, indium, silicon, aluminum, bismuth, or the like, but is not limited thereto, and any element capable of forming an alloy with lithium in the relevant technical field may be used. The thin film may be composed of one of the illustrations above or may be composed of various types of alloys. Since the negative electrode of the present disclosure further includes such a thin film, the cycle characteristics of an all-solid-state battery may be further improved.

The thickness of the thin film may be, for example, 1 to 800 nanometers (nm), 10 to 700 nm, 50 to 600 nm, or 100 to 500 nm. The thin film may be formed by, for example, a vacuum deposition method, a sputtering method, a plating method, or the like, but is not limited thereto, and any method capable of forming a thin film in the relevant technical field may be used.

The negative electrode of the present disclosure may further include, for example, a metal including lithium or a lithium alloy and/or a metal layer thereof, between the negative electrode current collector and the anode-free coating layer, and/or within the anode-free coating layer, by charging. The lithium alloy may be, for example, a Li-Al alloy, a Li-Sn alloy, a Li-In alloy, a Li-Ag alloy, a Li-Au alloy, a Li-Zn alloy, a Li-Ge alloy, a Li-Si alloy, or the like, but is not limited thereto, and any one used as a lithium alloy in the relevant technical field may be used. The metal or metal layer included between the negative electrode current collector and the anode-free coating layer, and/or within the anode-free coating layer may be composed of one of the alloys or lithium, or may be composed of multiple types of alloys.

The thickness of the metal layer including lithium or lithium alloy may be, for example, in the range of 1 to 1000 µm, 1 to 500 µm, 1 to 200 µm, 1 to 150 µm, 1 to 100 µm or 1 to 50 µm. The thickness is controlled as described above so that the metal layer may perform a role as a lithium storage well and improve cycle characteristics.

The metal layer may be formed by precipitation between the negative electrode current collector and the anode-free coating layer, for example, by charging after assembling an all-solid-state battery described below. If the metal layer is formed between the negative electrode current collector and the anode-free coating layer by charging after assembling an all-solid-state battery, the negative electrode current collector and the anode-free coating layer and the region therebetween may be, for example, a lithium-free region that does not include lithium in the initial state or the post-discharge state of the all-solid-state battery.

A second aspect of the present disclosure relates to a method for manufacturing a negative electrode.

The matters relating to the second aspect of the present disclosure may be applied in the same manner as the matters relating to the first aspect, unless otherwise specifically described.

The present disclosure relates to a method for manufacturing a negative electrode including a negative electrode current collector and an anode-free coating layer, the method including an operation of mixing a composite, a binder, and a solvent to form an anode-free coating layer slurry, and an operation of applying the anode-free coating layer slurry on the negative electrode current collector, wherein the composite is a composite of a carbon-based material and a metal halide compound.

In the operation of forming the anode-free coating layer slurry, the mixing may be performed by, for example, a thinky mixer, but is not limited thereto, and may be performed by a method commonly known in the art. The viscosity of the slurry may be controlled through the mixing.

In the operation of applying the anode-free coating layer slurry onto the negative electrode current collector, the application may be performed by, for example, direct gravure coating, micro gravure coating, slot die coating, coma coating, gravure coating, bar coating, roll coating, or slide coating, but is not limited thereto, and may be performed by a method commonly known in the art.

The method for manufacturing the negative electrode of the present disclosure may further include, for example, a drying operation. The drying operation may be performed subsequent to the applying operation. The drying operation may be performed at a temperature in a range of 50 to 110 degrees Celsius (°C), and may be performed by vacuum drying in an embodiment, but is not limited thereto, and may be performed by a method commonly known in the art.

The composite may be characterized by being prepared from a method including, for example, an operation of preparing a dispersion containing the carbon-based material and a precursor of a metal halide compound, and an operation of performing ultrasonic treatment for the dispersion.

The precursor of the metal halide compound may be characterized by being one or more selected from the group consisting of, for example, magnesium nitrate hexahydrate, magnesium perchlorate hydrate, magnesium sulfate hydrate, magnesium phosphate hydrate, magnesium lactate hydrate, magnesium D-gluconate hydrate, and ammonium fluoride.

The dispersion may further include, for example, a crosslinking agent. The crosslinking agent may be, for example, polyacrylic acid, polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinyl pyrrolidone, tetrafluoroethylene, polyethylene, polypropylene, ethylene-propylene-diene monomer (EPDM), sulfonated EPDM, styrene butadiene rubber (SBR), fluororubber, and polymers in which hydrogens thereof are substituted with Li, Na or Ca, or various types of binder polymers including various copolymers.

The method for preparing the composite may further include, for example, a drying operation. The drying operation may be performed subsequent to ultrasonic treatment operation for the dispersion. The drying operation may be performed at room temperature. The drying operation may be performed in a vacuum atmosphere.

A third aspect of the present disclosure relates to an all-solid-state battery.

Matters relating to the first aspect and/or the second aspect of the present disclosure may be equally applied to matters relating to the third aspect unless specifically stated otherwise.

In the present specification, "all-solid-state battery" may mean an all-solid-state secondary battery, and may also be referred to as a cell, a secondary battery, a battery, or the like.

The present disclosure is characterized by being an all-solid-state battery using lithium or a lithium alloy as a negative electrode active material, and the all-solid-state battery may include a positive electrode, a solid electrolyte layer, and a negative electrode according to the first aspect.

The positive electrode may include, for example, a positive electrode current collector and/or a positive electrode active material layer.

The positive electrode current collector may use any known metal that may be used as a current collector of an all-solid-state battery. The positive electrode current collector may use, for example, a plate, mesh, or foil composed of copper (Cu), nickel (Ni), aluminum (Al), vanadium (V), gold (Au), platinum (Pt), chromium (Cr), iron (Fe), zinc (Zn), indium (In), germanium (Ge), lithium (Li), magnesium (Mg), stainless steel, titanium (Ti), cobalt (Co), or an alloy thereof. The positive electrode current collector may be omitted in some cases.

The positive electrode active material layer may include, for example, a positive electrode active material, a solid electrolyte, a binder, and/or a conductive material.

The positive electrode active material reversibly absorbs and desorbs lithium ions. The positive electrode active material may be, for example, lithium transition metal oxides such as lithium cobalt oxide (LCO), lithium nickel oxide, lithium nickel cobalt oxide, lithium nickel cobalt aluminum oxide (NCA), lithium nickel cobalt manganese oxide (NCM), lithium manganate and lithium iron phosphate, nickel sulfide, copper sulfide, lithium sulfide, iron oxide, or vanadium oxide, but is not limited thereto, and any positive electrode active material used in the relevant technical field may be used. The positive electrode active materials may be used alone or in combination of two or more.

The lithium transition metal oxide may be, for example, a compound represented by any one among LiₐA_{1-b}B_{b}D₂ (where 0.90≤a≤1 and 0≤b≤0.5); LiₐNi_{1-b-c}Co_{b}B_{c}O_{2-α}F₂ (where 0.90≤a≤1, 0≤b≤0.5, 0≤c≤0.05 and 0<α<2); LiₐNi_{1-b-c}Mn_{b}B_{c}D_{α} (where 0.90≤a≤1, 0≤b≤0.5, 0≤c≤0.05 and 0≤α≤2); LiₐNi_{1-b-c}Co_{b}B_{c}D_{α} (where 0.90≤a≤1, 0≤b≤0.5, 0≤c≤0.05 and 0<α≤2); LiₐE_{1-b}B_{b}O_{2-c}D_{c} (where 0.90≤a≤1, 0≤b≤0.5 and 0≤c≤0.05); LiE_{2-b}B_{b}O_{4-c}D_{c} (where 0≤b≤0.5 and 0≤c≤0.05); LiₐNi_{1-b-c}Co_{b}B_{c}O_{2-α}F_{α} (where 0.90≤a≤1, 0≤b≤0.5, 0≤c≤0.05 and 0<α<2); LiₐCoG_{b}O₂ (where 0.90≤a≤1 and 0.001≤b≤0.1); LiₐMnG_{d}O₂ (where 0.90≤a≤1 and 0.001≤b≤0.1); LiₐMn₂G_{b}O₄ (where 0.90≤a≤1 and 0.001≤b≤0.1); LiₐNi_{1-b-c}Mn_{b}B_{c}O_{2-α}F_{α} (where 0.90≤a≤1, 0≤b≤0.5, 0≤c≤0.05 and 0<α<2); LiₐNi_{1-b-c}Mn_{b}B_{c}O_{2-α}F₂ (where 0.90≤a≤1, 0≤b≤0.5, 0≤c≤0.05 and 0<α<2); LiₐNi_{b}E_{c}G_{d}O₂ (where 0.90≤a≤1, 0≤b≤0.9, 0≤c≤0.5 and 0.001≤d≤0.1); LiₐNi_{b}Co_{c}Mn_{d}GₑO₂ (where 0.90≤a≤1, 0≤b≤0.9, 0≤c≤0.5, 0≤d≤0.5 and 0.001≤e≤0.1); LiₐNiG_{b}O₂ (where 0.90≤a≤1 and 0.001≤b≤0.1); QO₂; QS₂; LiQS₂; V₂O₅; LiV₂O₅; LiIO₂; LiNiVO₄; Li_{(3-f)}J₂(PO₄)₃ (0≤f≤2); Li_{(3-f)}Fe₂(PO₄)₃ (0≤f≤2); and LiFePO₄. In the compounds, A may be Ni, Co, Mn, or a combination thereof; B may be Al, Ni, Co, Mn, Cr, Fe, Mg, Sr, V, a rare earth element, or a combination thereof; D may be O, F, S, P, or a combination thereof; E may be Co, Mn, or a combination thereof; F may be F, S, P, or a combination thereof; G may be Al, Cr, Mn, Fe, Mg, La, Ce, Sr, V, or a combination thereof; Q may be Ti, Mo, Mn, or a combination thereof; I may be Cr, V, Fe, Sc, Y, or a combination thereof; J may be V, Cr, Mn, Co, Ni, Cu, or a combination thereof. A compound having a coating layer added to the surface of the compound may be used as a positive electrode active material, or a mixture of the compound and the compound having a coating layer added thereto may be used. The coating layer added to the surface of the compound may contain, for example, a lithium ion conductive oxide. Examples of the lithium ion conductive oxide include, but are not limited to, LiNbO₃, Li₄Ti₅O₁₂, and Li₃PO₄. The compound forming the coating layer may be amorphous or crystalline. The method of forming the coating layer may be considered, for example, spray coating and dipping, but may be selected without limitation within a range that does not adversely affect the physical properties of the positive electrode active material.

If the positive electrode active material is a ternary lithium transition metal oxide such as NCA or NCM, and contains nickel (Ni), the capacity density of the all-solid-state battery may be increased and the metal elution of the positive electrode active material in a charged state may be reduced. Accordingly, the cycle characteristics of the all-solid-state battery in the charged state may be improved.

The shape of the positive electrode active material may be, for example, particle forms such as a sphere and an elliptical sphere. The particle diameter of the positive electrode active material is not particularly limited, and may be within a range applicable to the positive electrode active material of a common all-solid-state secondary battery. The content of the positive electrode active material of the positive electrode is also not particularly limited, and may be within a range applicable to the positive electrode of the common all-solid-state secondary battery.

The solid electrolyte included in the positive electrode active material layer may be, for example, the same as or different from the solid electrolyte included in a solid electrolyte layer. The solid electrolyte included in the positive electrode active material layer may be, but is not limited to, a sulfide-based solid electrolyte, an oxide-based solid electrolyte, a phosphate-based solid electrolyte, or a halide-based solid electrolyte, and may be any electrolyte commonly used in all-solid-state batteries.

The solid electrolyte included in the positive electrode active material layer may have a smaller average particle diameter than, for example, the solid electrolyte included in the solid electrolyte layer. For example, the average particle diameter of the solid electrolyte included in the positive electrode active material layer may be 90% or less, 80% or less, 70% or less, 60% or less, 50% or less, 40% or less, 30% or less, or 20% or less of the average particle diameter of the solid electrolyte included in the solid electrolyte layer.

The binder included in the positive electrode active material layer may be, for example, acrylonitrile butadiene rubber (ABR), butadiene rubber (BR), styrene butadiene rubber (SBR), polytetrafluoroethylene, polyvinylidene fluoride, polyethylene, or the like.

The conductive material included in the positive electrode active material layer may be, for example, graphite, carbon black, acetylene black, Ketjen black, carbon fiber, or metal powder.

The positive electrode active material layer may further include additives such as fillers, coating agents, dispersants, and ion conductive assistants, and the additives may be used without limitation as long as they are known materials generally used in the electrode of all-solid-state batteries.

The solid electrolyte layer may include, for example, a sulfide-based solid electrolyte. The sulfide-based solid electrolyte may be, for example, one or more selected from Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-Li₃PO₄, Li₂S-SiS₂-LiₚMO_{q} (p and q are positive numbers, and M is one of P, Si, Ge, B, Al, Ga, and In), Li₂S-SiS₂-P₂S₅-LiI, Li₂S-P₂S₅, Li₂S-P₂S₅-LiX (X is a halogen element), Li₂S-B₂S₃, Li₂S-P₂S₅-ZₘSₙ (m and n are positive numbers, Z is one of Ge, Zn, or Ga), Lᵢ₂S-GeS₂, Li₇₋ₓPS₆₋ₓClₓ (0≤x≤2), Li₇₋ₓPS₆₋ₓBrₓ(0≤x≤2) and Li₇₋ₓPS₆₋ₓIₓ(0≤x≤2). The sulfide-based solid electrolyte may be prepared by treating starting materials such as Li₂S and P₂S₅ by a melting rapid cooling method or a mechanical milling method. In addition, a heat treatment may be performed after the treatment. The solid electrolyte may be in an amorphous, crystalline, or mixed state thereof. In the present disclosure, the sulfide-based solid electrolyte may be, for example, one including sulfur (S), phosphorus (P), and lithium (Li) as at least constituent elements among the above-mentioned sulfide-based solid electrolyte materials.

The sulfide-based solid electrolyte may be, for example, an argyrodite-type compound including one or more selected from Li₇₋ₓPS₆₋ₓClₓ (0≤x≤2), Li₇₋ₓPS₆₋ₓBrₓ (0≤x≤2), and Li₇₋ₓPS₆₋ₓIₓ (0≤x≤2). In particular, the sulfide-based solid electrolyte may be an argyrodite-type compound including one or more selected from Li₆PS₅Cl, Li₆PS₅Br and Li₆PS₅I.

The density of the argyrodite-type solid electrolyte may be, for example, 1.5 to 2.0 grams per cubic centimeter (g/cc). Since the argyrodite-type solid electrolyte has a density of 1.5 g/cc or more, the internal resistance of the all-solid-state secondary battery is reduced, and penetration of the solid electrolyte by Li may be effectively suppressed.

The elastic modulus of the solid electrolyte may be, for example, 15 to 35 giga pascals (GPa).

The solid electrolyte layer may include, for example, a binder. The binder included in the solid electrolyte layer may be, for example, one of the types of binders included in the positive electrode active material layer, but is not limited thereto, and any binder used in the relevant technical field may be used. The binder included in the solid electrolyte layer may be the same as or different from the binder included in the positive electrode active material layer and/or the anode-free coating layer described above.

The solid electrolyte layer may be characterized by having, for example, a thickness of 100 µm or less. In another embodiment, the solid electrolyte layer may be, but is not limited to, 90 µm or less, 80 µm or less, 70 µm or less, or 60 µm or less.

Hereinafter, the present disclosure will be explained in detail with reference to examples in order to specifically explain the disclosed contents of the present disclosure as described above and the intended actions and effects of the present disclosure. However, the examples may be modified into various other forms, and the scope of the present specification is not to be construed as being limited to the examples. It is emphasized that the examples represent the present disclosure and are provided to explain the present disclosure in more detail to those skilled in the art.

### Example 1.

### (C-MgF₂ Composite)

1.0 gram (g) of carbon black was dispersed in 150 milliliters (mL) of water, and 1.282 g of magnesium nitrate hexahydrate (Mg(NO₃)₂·6H₂O) was dissolved in the dispersion to prepare a carbon dispersion. Then, 50 mL of distilled water in which 0.370 g of ammonium fluoride (NH₄F) and 0.851 g of polyacrylic acid were dissolved, was added to the carbon dispersion and reacted in an ultrasonic disperser for 20 minutes for synthesis. Then, the resultant was dried in vacuum at room temperature to obtain the C-MgF₂ composite. In this case, the weight ratio of C and MgF₂ was 87.5:12.5.

### (Negative Electrode)

A binder solution was prepared by mixing polyvinylidene fluoride (PVDF) with an n-methyl pyrrolidone (NMP) solvent. Then, the synthesized C-MgF₂ composite was added to the binder solution to prepare a mixture. In this case, PVDF was 7 parts by weight relative to 100 parts by weight of the C-MgF₂ composite. The mixture was stirred with a thinky mixer to adjust the viscosity to an appropriate level. After adjusting the viscosity of the mixture, zirconia balls with 2 millimeters (mm) were added and stirred again with a thinky mixer to prepare a slurry. The stirred slurry was applied on a stainless steel (SUS) foil with a thickness of 10 µm using a bar coater, and then vacuum-dried at 80°C to prepare a negative electrode layer with a thickness of 10 µm.

### (Positive Electrode)

A positive electrode active material LiNi_{0.8}Co_{0.1}Mn_{0.1}O₂ (NCM), an argyrodite-type solid electrolyte Li₆PS₅Cl, a conductive material carbon nanofiber (CNF), and a binder polytetrafluoroethylene (PTFE) were prepared. Then, the materials were mixed using a blender with a ratio of positive electrode active material: solid electrolyte: conductive material: binder = 80:18:1:1, and then a dry sheet was manufactured using a roll press. Then, the dry sheet was bonded to an aluminum current collector to manufacture a positive electrode layer having a thickness of 150 µm.

### (Solid Electrolyte Layer)

n-Butyl butylate (NBB) was added as a binder solution to an argyrodite-type solid electrolyte Li₆PS₅Cl and mixed. In this case, the mixture was stirred using a thinky mixer to adjust the viscosity to an appropriate level. After adjusting the viscosity, zirconia balls with 2 mm were added and stirring was performed again using the thinky mixer to prepare a slurry. The slurry was cast on a release PET film and dried at room temperature to manufacture a solid electrolyte layer.

### (All-solid-state Battery)

The manufactured positive electrode layer was cut into a square size of 4 square centimeters (cm²), the manufactured solid electrolyte layer was cut into a square size of 5.76 cm², and the manufactured negative electrode layer was cut into a square size of 4.84 cm², and then these were laminated to manufacture an all-solid-state battery.

### Example 2.

An all-solid-state secondary battery was manufactured in the same manner as in Example 1, except that the ratio of C and MgF₂ in the C-MgF₂ composite in Example 1 was changed to a weight ratio of 75:25.

### Comparative Example 1.

An all-solid-state secondary battery was manufactured in the same manner as in Example 1, except that a mixture of carbon black and MgF₂ powder in a weight ratio of 90:10 was used instead of the C-MgF₂ composite in Example 1.

### Comparative Example 2.

An all-solid-state secondary battery was manufactured in the same manner as in Example 1, except that a mixture of carbon black and MgF₂ powder in a weight ratio of 75:25 was used instead of the C-MgF₂ composite in Example 1.

### Comparative Example 3.

An all-solid-state secondary battery was manufactured in the same manner as in Example 1, except that a mixture of carbon black and MgF₂ powder in a weight ratio of 50:50 was used instead of the C-MgF₂ composite in Example 1.

### Comparative Example 4.

An all-solid-state secondary battery was manufactured in the same manner as in Example 1, except that a mixture of carbon black and MgCl₂ powder in a weight ratio of 75:25 was used instead of the C-MgF₂ composite in Example 1.

### Comparative Example 5.

An all-solid-state secondary battery was manufactured in the same manner as in Example 1, except that carbon black was used alone instead of the C-MgF₂ composite in Example 1.

### Evaluation Example.

### 1. Nucleation Overpotential and Polarization of Lithium Deposition Process after Nucleation

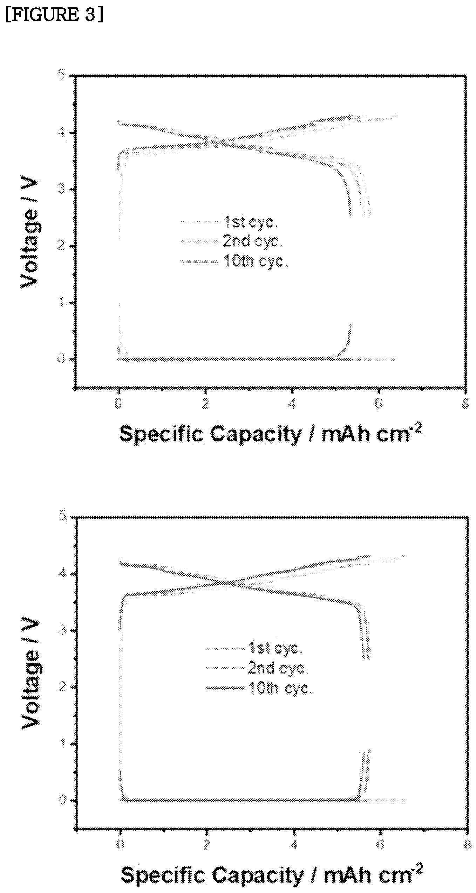

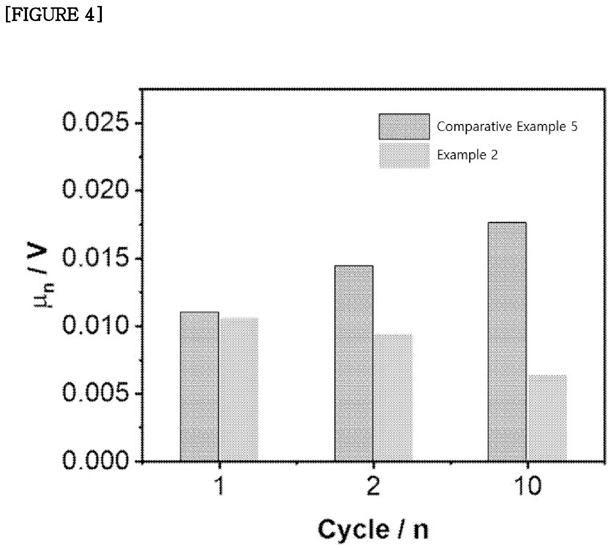

In order to confirm the role of MgF₂ in the charge and discharge process in an all-solid-state battery, a pouch-type three-electrode battery was fabricated and the potential change of the electrode was observed (FIG. 3). The working electrode and reference electrode of the battery used for electrochemical analysis were NCM and Li metal, respectively, and the C-MgF₂ composite of Example 2 or the carbon black of Comparative Example 5 was used as the counter electrode. When comparing the performance of the three-electrode batteries using the C-MgF₂ composite of Example 2 and the carbon black of Comparative Example 5, a remarkable difference in the trend of the negative electrode potential change according to cycling was observed (FIG. 4 and Table 1). Throughout the cycling process, the nucleation overpotential was relatively reduced in the C-MgF₂ composite of Example 2 compared to the carbon black of Comparative Example 5. The C-MgF₂ composite of Example 2 showed a tendency for the overpotential to decrease according to cycling, unlike the carbon black of Comparative Example 5, where the overpotential gradually increased. In addition, the polarization of a lithium deposition process after nucleation decreased according to cycling for the C-MgF₂ composite of Example 2, unlike the carbon black of Comparative Example 5 (Table 1).

**[Table 1]**

| **Cycle number** | **µ_{CB}** | **η_{CB}** | **µ_{CB} - η_{CB}** | **µ_{MgF2@C}** | **η_{MgF2@C}** | **µ_{MgF@C2} - η_{MgF2@C}** |
|---|---|---|---|---|---|---|
| 1 | 0.0110 | 0.0051 | 0.0059 | 0.0106 | 0.0049 | 0.0057 |
| 2 | 0.0145 | 0.0060 | 0.0085 | 0.0094 | 0.0030 | 0.0064 |
| 10 | 0.0177 | 0.0081 | 0.0096 | 0.0064 | 0.0025 | 0.0039 |

In Table 1 above, the unit of each value is V, MgF₂@C means a C-MgF₂ composite, µ is the overpotential formed due to polarization during discharging, and η means the nucleation overpotential.

According to x-ray photoelectron spectroscopy (XPS) analysis, most of the MgF₂ observed on the surface of the electrode before battery operation was converted to a Mg-Li alloy and LiF after 10 cycles. This suggests that the remarkable overpotential difference observed during alloying/deposition in the initial cycles may be due to the decomposition of MgF₂ and subsequent Mg-Li alloy formation during cycling. The gradual stabilization of the overpotential of the negative electrode may be due to the stabilization of lithium deposition by the Mg-Li alloy. The improved kinetics was also evident from the form of lithium produced during the charge process.

### 2. Cross-sectional Morphology of Anode-free Coating Layer

As a result of SEM observation of the cross-sectional morphology of the charged anode-free coating layer, numerous pores were observed on the cross-section of the anode-free coating layer of Comparative Example 5. In contrast, the anode-free coating layer of Example 2 showed a dense cross-section without noticeable pores. The anode-free coating layer of Example 2 promoted rapid lithium migration in the carbon/Mg-Li/LiF layer in the negative electrode due to the presence of Mg, forming a relatively dense Li-Mg alloy layer. Therefore, the experimental evidence confirms that the Mg metal formed by the decomposition of MgF₂ improves the kinetics by reducing the overpotential during charging and enables the stabilization of the alloy layer through the nucleation and alloying process during lithiation.

### 3. Discharge Capacity

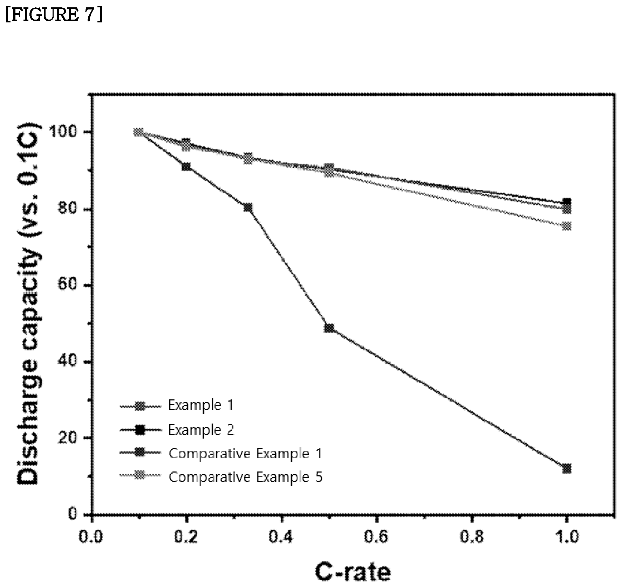

The all-solid-state batteries (pouch-type monocells) of the Examples and Comparative Examples were operated under the charge and discharge conditions below in an operating voltage range of 4.25 volts (V) - 2.5 V at the operating temperature of 60°C, and the discharge capacity according to C-rate was evaluated, and the results are shown in Table 2 below and FIG. 7.
Charge conditions: 0.1 C, 4.25 V CC/CV, 0.05 C cut-off
Discharge conditions: 0.1 C or 1 C, 2.5 V, CC

**[Table 2]**

| | **0.1 C discharge capacity** | **1 C discharge capacity** |
|---|---|---|
| **Example 1** | 229.2 | 183.2 |
| **Example 2** | 225.6 | 183.4 |
| **Comparative Example 1** | 180.6 | 21.8 |
| **Comparative Example 2** | 55.7 | 3.1 |
| **Comparative Example 3** | 34.2 | 2.7 |
| **Comparative Example 4** | 62.5 | 5.1 |
| **Comparative Example 5** | 226.8 | 171.2 |

### 4. Capacity Retention

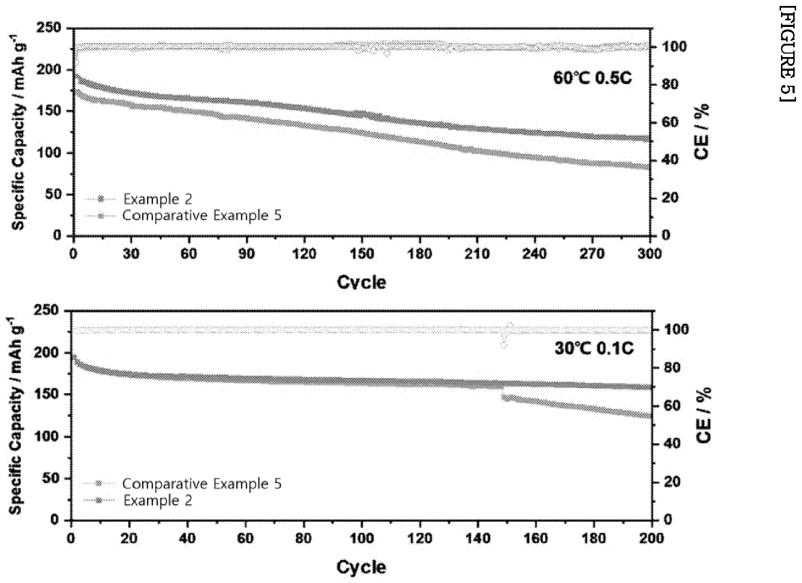

The stabilization of lithium metal deposition by the Mg-Li alloy formed through the conversion of the C-MgF₂ composite is evident in the capacity retention at various rates and the pouch cell cycle characteristics of the whole batteries (FIGS. 5 to 7).

The highest capacity retention (81.5%) was observed after cycling at rates between 0.1 C and 1.0 C in Example 2 (FIGS. 5 to 7), and similar performance was observed in Example 1.

In addition, the cycle lifespan of Example 2 was also investigated. Example 2 exhibited a capacity retention of 61.32% (191.3 milliampere-hours per gram (mAh/g) to 117.3 mAh/g) at 300 cycles and a higher discharge capacity than the carbon black of Comparative Example 5 at all cycles. In contrast, Comparative Example 5 exhibited a retention of 47.8% (172.3 mAh/g to 82.7 mAh/g) after 300 cycles.

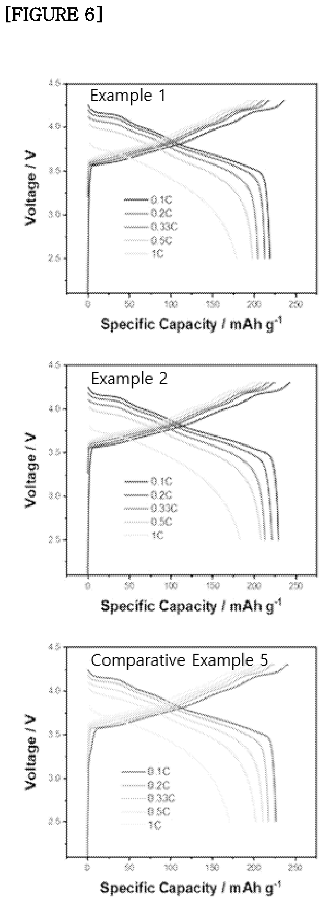

In addition, the superiority of the C-MgF₂ composite of Example 2 over the carbon black of Comparative Example 5 was prominent at room temperature (FIG. 6). Both Example 2 and Comparative Example 5 exhibited stable cycling for about 150 cycles, with Example 2 exhibiting slightly better cycling characteristics. While Example 2 exhibited an excellent capacity retention of 81.4% (194.4 mAh/g to 158.4 mAh/g) up to 200 cycles, Comparative Example 5 exhibited a rapid capacity drop followed by a remarkable deterioration in life characteristics. The rapid deterioration seems to be caused by accumulated side effects due to nonuniform lithium plating behavior, resulting in serious battery damage. It was confirmed that the negative electrode of Example 2 ensured, if applied, stable lithium plating and peeling, thereby remarkably improving battery lifespan.

## Claims

1. A negative electrode comprising a negative electrode current collector and an anode-free coating layer, wherein
the anode-free coating layer comprises a composite of a carbon-based material and a metal halide compound.

2. The negative electrode according to claim 1, wherein the metal halide compound is represented by the following Formula 1:
[Formula 1] MXₙ
in Formula 1, M is one metal selected from Mg, Ag, Zn, Al, Sn, Ge, Cu, In, Ni, Bi, Au, Si, Pt, Pd or a combination thereof, X is a halogen element, and n is an integer of 1 or more.

3. The negative electrode according to claim 2, wherein X is F or Cl.

4. The negative electrode according to claim 1, wherein the content of the metal halide compound relative to the anode-free coating layer is 30 weight percentage (wt%) or less.

5. The negative electrode according to claim 1, wherein the composite is a composited metal halide compound on the surface of the carbon-based material.

6. The negative electrode according to claim 1, wherein the carbon-based material is amorphous carbon.

7. The negative electrode according to claim 1, wherein the anode-free coating layer comprises a binder in a range of 0.1 to 20 parts by weight relative to 100 parts by weight of the composite.

8. A method for manufacturing a negative electrode comprising a negative electrode current collector and an anode-free coating layer, the method comprising:
mixing a composite, a binder, and a solvent to form an anode-free coating layer slurry; and
applying the anode-free coating layer slurry onto the negative electrode current collector, wherein
the composite is a composite of a carbon-based material and a metal halide compound.

9. The method for manufacturing a negative electrode according to claim 8, wherein the composite is prepared by a method comprising:
preparing a dispersion comprising the carbon-based material and a precursor of the metal halide compound; and
performing ultrasonic treatment for the dispersion.

10. The method for manufacturing a negative electrode according to claim 9, wherein the precursor of the metal halide compound is one or more selected from the group consisting of magnesium nitrate hexahydrate, magnesium perchlorate hydrate, magnesium sulfate hydrate, magnesium phosphate hydrate, magnesium lactate hydrate, magnesium D-gluconate hydrate and ammonium fluoride.

11. An all-solid-state battery using lithium or a lithium alloy as a negative electrode active material, wherein the all-solid-state battery comprises a positive electrode, a solid electrolyte layer, and the negative electrode according to claim 1.

12. The all-solid-state battery according to claim 11, wherein the solid electrolyte layer comprises a sulfide-based solid electrolyte.

13. The all-solid-state battery according to claim 12, wherein the sulfide-based solid electrolyte is one or more selected from Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-Li₃PO₄, Li₂S-SiS₂-LiₚMO_{q} (p and q are positive numbers, and M is one of P, Si, Ge, B, Al, Ga and In), Li₂S-SiS₂-P₂S₃-LiI, Li₂S-P₂S₅, Li₂S-P₂S₃-LiX (X is a halogen element), Li₂S-B₂S₃, Li₂S-P₂S₅-ZₘSₙ (m and n are positive numbers, Z is one of Ge, Zn, or Ga), Li₂S-GeS₂, Li₇₋ₓPS₆₋ₓClₓ (0≤x≤2), Li₇₋ₓPS₆₋ₓBrₓ (0≤x≤2) and Li₇₋ₓPS₆₋ₓIₓ (0≤x≤2).
